# EUROPEAN PATENT SPECIFICATION

(11) **EP 2 458 463 B1**
(45) Date of publication and mention of the grant of the patent: **17.12.2014**
(21) Application number: 09847581.7
(22) Date of filing: 22.07.2009
(51) Int. Cl.: G05B 19/406, G05B 19/042, G05B 9/02, G06F 21/31, G06F 21/62

(54) **REMOTE CONTROL SYSTEM FOR MACHINE TOOL**
FERNSTEUERUNGSSYSTEM FÜR EINE WERKZEUGMASCHINE
SYSTÈME DE TÉLÉCOMMANDE POUR MACHINE-OUTIL

(43) Date of publication of application: 30.05.2012
(73) Proprietor: MAKINO MILLING MACHINE CO., LTD., Meguro-ku Tokyo 152-8578 (JP)
(72) Inventor: SHIGEHARA, Mikio, Aiko-gun Kanagawa 243-0303 (JP)
(74) Representative: Thum, Bernhard
(86) International application number: PCT/JP2009/063447
(87) International publication number: WO 2011/010396

(56) References cited:
- WO-A1-2007/086475
- DE-A1-102005 063 085
- JP-A- 6 119 021
- JP-A- 11 328 119
- JP-A- 2002 366 248
- JP-A- 2003 295 943
- JP-A- 2008 221 363
- US-A- 6 122 556
- US-A1- 2004 148 513
- US-B1- 6 218 802
- US-B1- 7 035 697
- US-B1- 7 356 372

## Description

### [Field of the Invention]

The present invention relates to a remote control system for a machine tool comprising a controller of a machine tool and an operation terminal apparatus provided at a location remote from the machine tool and connected to the machine tool via a communication line, wherein remote control of the machine tool from the operation terminal is possible.

### [Background Art]

A machine tool such as a machining center, a milling machine, a lathe, an electrical discharge machine, and the like has various functions, and an operator can change the setting of the machine tool or cause various operations to be carried out. However, it is not necessary to change all settings, and setting which have to be set before ordinary machining is carried out. When plural operators use one machine tool and can control every function of the machine tool, a setting of the machine tool that is not ordinarily changed may sometimes be changed due to a wrong operation, and thus, settings have to be confirmed every time an operator is changed.

Therefore, as disclosed in Japanese Unexamined Patent Application Publication No. 2004-167669, it has been proposed that operators are registered in a controller of a machine tool in advance, and for each' registered operator, operation-allowed functions and operation-forbidden functions are set so that each operator is allowed to control only limited functions.

In recent years, a controller of a machine tool is not only operated directly from a control board of the controller provided in the vicinity of the machine tool, but also is increasingly remotely operated from an operation terminal apparatus provided at a location remote from the machine tool and connected to the controller via a network. In order to remotely operate a controller of a machine tool, directly operating of the controller from an operation terminal apparatus is adopted, or as disclosed in Japanese Unexamined Patent Application Publication No. 2003-5812, displaying a control board screen of the controller directly on the screen of the operation terminal apparatus and operating the controller on the screen has been generally adopted.

### [Citation List]

### [Patent Literature]

Patent Literature 1: Japanese Unexamined Patent Application Publication No. 2004-167669 Patent Literature 2: Japanese Unexamined Patent Application Publication No. 2003-5812 2008/0033588 A1 remote control for to-be-controlled device of a plant comprising a device controller and an operation/monitor device provided at a location remote from the to-be-controlled device, wherein said operation/monitor device includes an input device for inputting login user information. Furthermore there provided a user skill level management device comprising a user skill level database which stores, in an associated manner, user information, skill level information indicative of a skill level of an operation by the user, and authority information corresponding to the skill level information. The acquired authority information, together with the login user information, is transmitted to the operation/ monitor device and stored in an operation authority database in said operation/monitor device. When a user inputs an operation instruction through the input device for operating said to-be-controlled device, it is determined whether the user is authorized to perform the input operation instruction, defined by the operation authority information acquired from the operation authority database, and the operation instruction is only output control when it is determined that has authority to perform said operation.

### [Summary of the Invention]

### [Problem to be solved by the Invention]

However, when functions of controllers of machine tools are to be directly operated from an operation terminal apparatus, there is a problem that each controller has different functions which makes it difficult to design versatile software for remote control that can operate controllers of plural kinds of machine tool from one operation terminal apparatus, and there is also another problem that, if various functions of controllers are modified, the remote operating software of the operation terminal apparatus needs to be corrected accordingly. Further, in this case, setting of restricted functions for each operator is done on the operation terminal apparatus, and since functions provided may be different for each controller, setting of allowable operations and forbidden operations for various functions of controllers of all machine tools for each operator requires tremendous effort. Further, when additional machine tools and associated controllers are connected via the network to the operation terminal apparatus or additional functions are provided on the controllers of machine tools, setting anew allowable operations and forbidden operations for these additional machine tools and associated controllers and for additional functions of the controllers for each operator also requires tremendous effort, and this is another problem.

On the other hand, if the display screen of the control board of controllers is directly displayed on the screen of the operation terminal apparatus and operation is carried out on this screen, construction of a versatile remote control system is relatively easy. In this case, however, restriction of functions for each operator has to be set on the side of the controller of machine tools, and allowed operations and forbidden operations for each operator have to be set on the controllers of all machine tools. Further, when additional machine tools and associated controllers are connected via the network to the operation terminal apparatus or functions are added to or modified in the controllers of machine tools, allowed operations and forbidden operations have to be reset or modified for each operator on the side of the controllers of machine tools.

Further, conditions of the machine tools cannot be visually recognized in the case of remote control and in view of ensuring safety and preventing a wrong operation, it is desirable that the range of allowed operations be restricted in remote control operation compared to direct operation of the controller of machine tools, such that, for example, in remote control, only input of processing program is allowed even for the same operator. However, when the display screen of the controllers of machine tool is directly displayed and operated on the screen of the operation terminal apparatus, restriction of allowed functions is set on the side of the controller, and this setting of restriction of allowed functions in accordance with operators cannot be changed on the side of operation terminal apparatus. Therefore, it is difficult to change the range of allowed operations for the same operator depending on whether the controller is operated in remote control or the controller is directly operated on the control board, and thus, it is difficult to ensure safety and prevent wrong operation in remote control.

Therefore, it is an object of the present invention to resolve the above-described problem of remote control in prior art and to provide a system of remote control machine tools that is capable of preventing a wrong operation and ensuring safety, and that can easily accommodate addition and modification of functions of the machine tools.

### [Means for solving the Problem]

In order to attain the above object, in accordance with the present invention, there is provided a remote control system for a machine tool comprising a machine tool controller arranged in the vicinity of the machine tool and an operation terminal apparatus provided at a location remote from the machine tool, and remote control of the machine tool can be carried out from the operation terminal apparatus,wherein the operation terminal apparatus comprises a registered name inputting section that inputs a registered name, and an authorization level database that specifies the authorization level corresponding to the registered name inputted from said registered name input section in said operation terminal apparatus, and the operation terminal apparatus, by referring to the authorization level database, transmits an authorization level machine tool controller, and wherein the machine tool controller comprises an input section, an authorization level database that specifies the authorization level corresponding to the registered name inputted from said registered name input section in said operation terminal apparatus, and a restricted function database that matches an authorization level to operation-allowed functions or operation-forbidden functions, and the machine tool controller, by referring to the restricted function database, specifies the operation-allowed functions or operation-forbidden functions corresponding to the received authorization level, and thus, functions of the machine tool controller that can be operated through the operation terminal apparatus by an operator are restricted in accordance with the registered name inputted from the operation terminal apparatus and the authorization level received from said operation terminal apparatus, and functions of the machine tool controller that can be directly operated by an operator from said machine tool controller are restricted according to the registered name inputted to the input section in said machine tool controller and the authorization level received from the authorization database in said machine tool controller.

In the remote control system for a machine tool as described above, the authorization level database that matches a registered name to an authorization level is provided in the operation terminal apparatus, and the restricted function database that matches an authorization level to operation-allowed functions or operation forbidden functions is provided in the machine tool controller, so that, when a registered name is added, only an authorization level corresponding to the registered name needs to be set in the authorization level database in the operation terminal apparatus. Also, when functions are added to or modified in the controller of the machine tool, this addition or modification of functions can be easily accommodated simply by setting whether operations of the added or modified functions are allowed or forbidden for each authorization level in the machine tool controller. Further, since an authorization level is specified for each registered name in the operation terminal apparatus, restriction of functions that is valid only when the controller of the machine tool is operated from the operation terminal apparatus becomes possible.

The operation terminal apparatus may be connected to a plurality of machine tool controllers via communication lines.

The machine tool controller may comprise a selector switch for selecting whether remote control from the operation terminal apparatus should be allowed or should be forbidden.

### [Advantageous Effect of the Invention]

In accordance with the present invention, addition of a registered name can be accommodated simply by setting an authorization level corresponding to the registered name in the authorization level database, and modification or addition of functions of the machine toolcontroller can be accommodated simply by setting whether operation of the added or modified function should be allowed or forbidden for each authorization level of the restricted function database of the machine tool controller, and thus, prevention of incorrect operation and ensuring safety can be facilitated. Also, since restriction of functions that is valid only when the machine tool controller is operated from the operation terminal apparatus becomes possible, operation of functions which may lead to danger when operated from the operation terminal apparatus can be restricted, and it becomes possible to ensure safety in remote control.

### [Brief Description of Drawings]

The above and other objects, features and advantages of the present invention will be described in detail below based on embodiments of the invention with reference to appended drawings, in which:
Fig. 1 is a functional block diagram showing the general construction of the remote control system for a machine tool according to the present invention;
Fig. 2 is a view showing an example of an authorization level database used in the remote control system for machine tool shown in Fig. 1; and
Fig. 3 is a view showing an example of a restricted function database used in the remote control system for machine tool shown in Fig. 1.

### [Best Mode for carrying out the Invention]

The embodiments of remote control system for machine tool according to the present invention will be described below with reference to drawings.

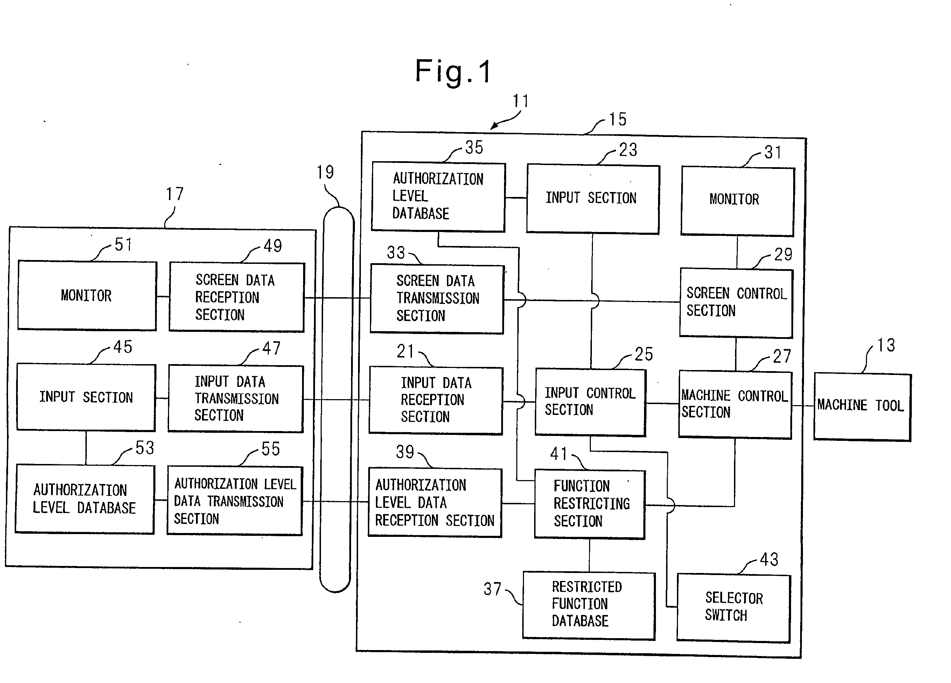

First, referring to Fig. 1, the general construction of a remote control system 11 for a machine tool according to the present invention will be described. The remote control system 11 for a machine tool comprises a machine tool 13, a machine tool controller 15, and an operation terminal apparatus 17. The machine tool controller 15 is arranged in the vicinity of the machine tool 13, and is connected to the machine tool 13 via a cable or the like so as to be able to control the operation of the machine tool 13. On the other hand, the operation terminal apparatus 17 is arranged at a location remote from the machine tool 13, and is connected to the machine tool controller 15 via a communication line such as a network 19, and is able to control the operation of the machine tool 13 via the network 19 and the machine tool controller 15. The operation terminal apparatus 17 may be connected to plural machine tool controllers 15 via the network 19.

The network 19 includes LAN (Local Area Network), WAN (Wide Area Network), Internet, etc.

The machine tool controller 15 comprises an input data reception section 21, an input section 23, an input control section 25, a machine control section 27, a screen control section 29, a monitor 31 and a screen data transmission section 33.

The input data reception section 21 receives input data inputted from the operation terminal apparatus 17 via the network 19. The input section 23 may be composed of a keyboard, a touch panel, a memory reading device (for example, a memory card), and the like, provided on a control board (not shown) of the machine tool controller 15, and an operator can input various information and instructions.

The input control section 25, the machine control section 27 and the screen control section 29 can be constructed from CPU (Central Processing Unit) and programs executed therein. The input control section 25 receives input data that have been received by the input data reception section 21 and input data that are inputted from the input section 23, and outputs them to the machine control section 27. The machine control section 27 has various functions, and can, with these functions, modify setting of the machine tool 13 or control the operation of the machine tool 13. The screen control section 29 generates display screen data for displaying a function operating screen or information such as processing status.

The monitor 31 can be composed of a liquid crystal panel provided on the control board of the machine controller 15, and displays a function operating screen or information based on the screen data generated by the screen control section 29. The screen data transmission section 33 transmits the screen data generated by the screen control section 29 to the operation terminal apparatus 17.

The machine tool controller 15 further comprises an authorization level database 35, a restricted function database 37, an authorization level data reception section 39 and a function restricting section 41.

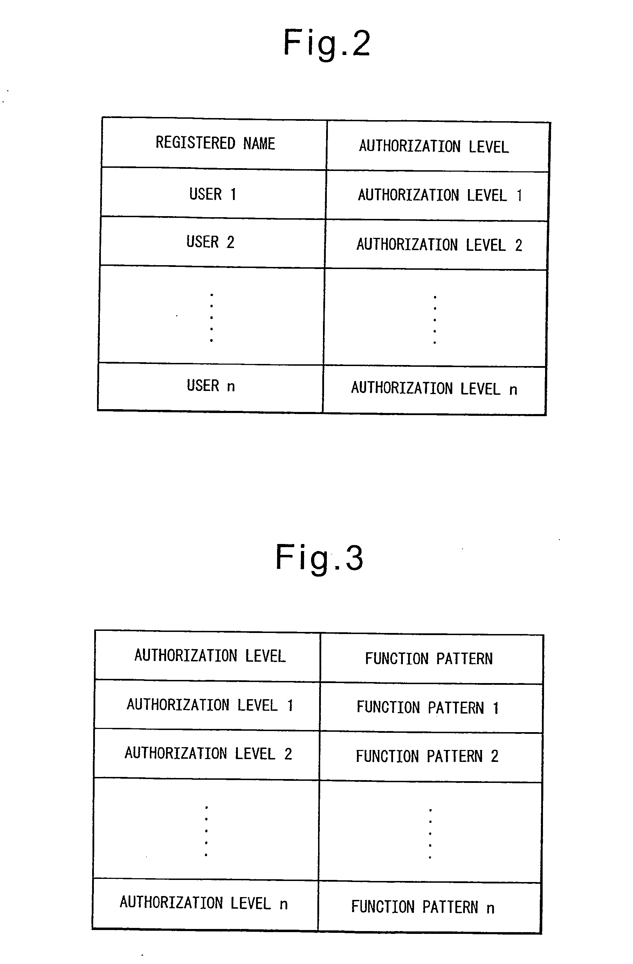

The authorization level database 35 and the restricted function database 37 are both stored in memory such as RAM (Random Access Memory) or the like, and can be modified as necessary based on input data from the input section 23. It is desirable that content of the authorization level database 35 and the restricted function database 37 can be modified only by limited persons, for example, a production director having administrator authority. The authorization level database 35 is a database that matches a registered name to an authorization level, as shown in Fig. 2, and the restricted function database 37 is a database that matches an authorization level to a function pattern, as shown in Fig. 3. In a function pattern that is matched to an authorization level, either the kind of operation-allowed functions may be specified or the kind of operation-forbidden functions may be specified.

The authorization level data reception section 39 receives an authorization level outputted from the operation terminal apparatus 17 via the network 19. When an operator directly operates the machine tool controller 15 from the control board etc., the function restricting section 41 refers to the authorization level database to specify the authorization level of the operator corresponding to the registered name inputted from the input section 23 by the operator. When an operator operates the machine tool controller 15 from the operation terminal apparatus 17, the function restricting section 41 specifies the authorization level of the operator from the authorization level data received from the operation terminal apparatus 17 via the authorization level data reception section 39. Further, after the function restricting section 41 specifies the authorization level of the operator, it refers to the restricted function database 37 to specify the function pattern corresponding to the specified authorization level, and enables the operator of the specified authorization level to use operation-allowed functions.

The machine tool controller 15 preferably comprises a selector switch 43 for selecting whether operation of the machine tool controller 15 from the operation terminal apparatus 17 should be allowed or forbidden. By providing this selector switch 43, unintentional operation of the machine tool controller 15 from the operation terminal apparatus 17 can be avoided.

The operation terminal apparatus 17 may be composed of a personal computer executing the software for remote control, and can operate one machine tool controller 15 selected from plural machine tool controllers 15 connected via the network 19. The operation terminal apparatus 17 comprises an input section 45, an input data transmission section 47, a screen data reception section 49, a monitor 51, an authorization level database 53, and an authorization level data transmission section 55.

The input section 45 can be composed of a keyboard, a touch panel, a memory reader (for example, a CD-ROM reader), etc. An operator can input various information and instructions from the input section 45. The input data transmission section 47 transmits the input data inputted from the input section 45 via the network 19 to the input data reception section 21 of the machine tool controller 15.

The screen data reception section 49 receives screen data from the screen data transmission section 33 of the machine tool controller 15 via the network 19. The monitor 51 displays a screen or various information based on the screen data received via the screen data reception section 49.

The authorization level database 53, like the authorization level database 35 of the machine tool controller 15, is a database that matches a registered name to an authorization level, and is stored in advance in a memory such as a hard disc, and can be modified as necessary by the input data from the input section 45. The authorization level data transmission section 55 refers to the authorization level database 53 to specify the authorization level of the operator corresponding to the registered name inputted from the input section 45, and transmits the specified authorization level to the authorization level data reception section 39 of the machine controller 15 via the network 19.

Since the authorization level database 53 that matches a registered name to an authorization level is provided in the operation terminal apparatus 17 and the restricted function database 37 that matches an authorization level to operation-allowed functions or operation-forbidden functions is provided in the machine tool controller 15, addition of a registered name can be accommodated by simply setting an authorization level corresponding to the registered name in the authorization level database 53 of the operation terminal apparatus 17, and modification or addition of functions of the machine tool controller 15 can be accommodated by simply setting whether the operation of the modified or added functions should be allowed or forbidden for each authorization level of the restricted function database 37 of the machine tool controller 15.

In particular, when plural machine tool controllers 15 are connected via the network 19 to the operation terminal apparatus 17, even if the machine tool controllers 15 each has different functions, if, in the restricted function database 37 of each machine tool controller 15, each authorization level is matched to operation-allowed functions or operation-forbidden functions, restriction of functions can be set for an operator of registered name with imparted authorization level simply by matching an authorization level to each registered name in the authorization level database 53. Thus, workload for setting function restriction can be reduced, and addition of machine tool controllers 15 connected via the network 19 to the operation terminal apparatus 17, and modification or addition of functions in the machine tool controllers 15 can be easily accommodated.

Since the machine tool controller 15 and the operation terminal apparatus 17 have respectively own authorization level databases 35 and 53, they can independently specify an authorization level for each registered name. Therefore, restriction of functions that is valid only when the machine tool controller 15 is operated from the operation terminal apparatus 17 without visually recognizing conditions of the machine tool 13 becomes possible, and thus, without affecting direct operation of the machine tool controller 15, operation of functions which may give rise to danger when operated from the operation terminal apparatus can be restricted, and safety of remote control operation can be thereby ensured.

Next, operation of the remote control system 11 for the machine tool 13 shown in Fig. 1 will be described.

When the machine tool 13 is operated from the control board of the machine tool controller 15 arranged in the vicinity of the machine tool 13, the selector switch 43 is used to switch to the mode in which the machine tool controller 15 is directly operated, and an operator inputs various information and instructions from the input section 23 provided on the control board. First, the operator inputs the registered name from the input section 23. Then, the function restricting section 41 refers to the authorization level database 35 to specify the authorization level corresponding to the registered name inputted from the input section 23, and then refers to the restricted function database 37 to specify the function pattern corresponding to the specified authorization level and determine the operation-allowed functions or operation forbidden functions for the machine control section 27, and enables the operator to operate only functions within the determined range. The screen control section 29 generates screen data in accordance with the instruction of the machine control section 27 such that, for example, on the function operation screen, buttons and entry field associated with the operation-forbidden functions are disabled.

The information and instructions inputted by the operator from the input section 23 are transmitted via the input control section 25 to the machine control section 27, and based on the transmitted input data, the machine control section 27 uses various functions to control the machine tool 13 connected to the machine tool controller 15.

On the other hand, when the machine tool 13 is operated from the operation terminal apparatus 17 that is arranged at a location remote from the machine tool 13, the machine tool controller 15 corresponding to the machine tool 13 which the operator desires to operate is connected via the network 19 to the operation terminal apparatus 17. If the operation terminal apparatus 17 is connected via the network 19 to plural machine tool controllers 15, from address information of the machine tool controllers 15 or the like, the machine tool 13 which the operator desires to operate is specified and selected. In the machine tool controller 15 corresponding to the machine tool 13 which the operator desires to operate, the selector switch 43 is used to switch to the mode in which operation of the machine tool controller 15 by the operation terminal apparatus 17 is allowed.

The operator inputs the registered name from the input section 45 provided in the operation terminal apparatus 17. Then, the authorization level data transmission section 55 refers to the authorization level database 53 to specify the authorization level of the operator corresponding to the inputted registered name, and transmits the specified authorization level via the network 19 to the authorization level data reception section 39 of the machine tool controller 15. The function restricting section 41 of the machine tool controller 15 refers to the restricted function database 37 to specify the function pattern corresponding to the authorization level of the operator that is received by the authorization level data reception section 39, determines the operation-allowed functions or operation-forbidden functions in the machine control section 27, and enable the operator to operate only the functions within the determined range. The screen control section 29 generates screen data in accordance with the instructions from the machine control section 27 such that, for example, on the function operating screen, buttons and entry fields associated with the operation forbidden functions or operation-non-allowed functions are disabled, and the generated screen data are transmitted from the screen data transmission section 33 via the network 19 to the screen data reception section 49 of the operation terminal apparatus 17. The screen data received by the screen data reception section 49 of the operation terminal apparatus 17 are displayed on the monitor 51 of the operation terminal apparatus 17.

The information and instructions inputted by the operator from the input section 45 of the operation terminal apparatus 17 are transmitted from the input data transmission section 47 of the operation terminal apparatus 17 via the network 19 to the input data reception section 21 of the machine tool controller 15. In the machine tool controller 15, the input data received by the input data reception section 21 is communicated via the input control section 25 to the machine control section 27, and based on the communicated input data, the machine control section 27 uses various functions to control the machine tool 13 connected to the machine tool controller 15.

Thus, in the remote control system 11 for the machine tool 13, the screen data generated by the screen control section 29 of the machine tool controller 15 is displayed on the monitor 51 of the operation terminal apparatus 17, so that, even when different machine tool controllers 15 having different functions are connected via the network 19 to the operation terminal apparatus 17, a versatile software for remote control can be used to operate a machine tool controller 15 and corresponding machine tool 13 as if it is operated while being watched on the screen of the monitor 31 of the machine tool controller 15, and proper functions of various machine tool controllers 15 can be easily utilized. Therefore, it is not necessary to provide a special software for remote control for each machine tool controller 15. Further, even when functions of the machine tool controller 15 are added or modified, such addition or modification can be easily accommodated simply by changing the screen data generated by the screen control section 29 of the machine tool controller 15, without changing the software for remote control of the operation terminal apparatus 17.

Since the machine tool controller 15 and the operation terminal apparatus 17 are both provided with respective authorization level database 35, 53, in the authorization level database 35 of the machine tool controller 15 and the authorization level database 53 of the operation terminal apparatus 17, different authorization level can be matched to same registered name. Therefore, an operator with a same registered name may be given different authorization levels so as to change operation-allowed functions or operation-forbidden functions depending on whether the machine tool controller 15 is operated directly or from the operation terminal apparatus 17. Since the machine tool controller 15 is arranged in the vicinity of the machine tool 13, it can be operated while condition of the machine tool is visually recognized. On the other hand, since the operation terminal apparatus 17 is arranged at a location remote from the machine tool 13, condition of the machine tool cannot be visually recognized. Therefore, in view of ensuring safety and preventing wrong operation, there are functions for which operation should be forbidden for same operator only when it is operated from the operation terminal apparatus 17. Thus, it may be particularly effective to change operation-allowed functions or operation-forbidden functions depending on whether the machine tool controller 15 is directly operated or the machine tool controller 15 is operated from the operation terminal apparatus 17.

The remote control system for a machine tool according to the present invention has been described above with reference to drawings showing embodiments thereof. However, it is to be understood that the present invention is not limited to the illustrated embodiments, but to the scope of the appended claims. Although, in the illustrated embodiments, the authorization level database 35 is also provided in the machine tool controller 15, it is also possible to provide the authorization level database 53 only in the operation terminal apparatus 17, and when an operator directly operates the machine tool controller 15, function pattern may be set as defined beforehand. Although the machine tool controller 15 and the operation terminal apparatus 17 are connected via the network 19, these apparatuses may be connected one-to-one correspondence via communication line such as serial transmission or parallel transmission, and communication lines such as cable communication or wireless communication can be used.

## Claims

1. A remote control system (11) for a machine tool 13), comprising a machine tool controller (15) arranged in the vicinity of the machine tool (13) and an operation terminal apparatus (17) provided at a location remote from the machine tool (13),
wherein said operation terminal apparatus (17) comprises a registered name input section (45) for inputting a registered name, and an authorization level database (53) that specifies the authorization level corresponding to the registered name inputted from said registered name input section (45) in said operation terminal apparatus (17) and said operation terminal apparatus (17), by referring to said authorization database (53), transmits the authorization level to said machine tool controller (15);
wherein said machine tool controller (15) comprises an input section (23), an authorization database (35) that specifies the authorization level corresponding to the registered name inputted from the input section (23) in said machine tool controller (15), and a restricted function database (37) that matches an authorization level to operation-allowed functions or operation-forbidden functions, and said machine tool controller (15) , by referring to the restricted function database (37), specifies the operation-allowed functions or operation-forbidden functions corresponding to the received authorization level; and
wherein, in accordance with the registered name inputted to said operation terminal apparatus (17), functions of said machine tool controller (15) that can be operated by an operator via said operation terminal apparatus (17) are restricted according to the authorization level received from said operation terminal apparatus (17); and
wherein, in accordance with the registered name inputted to the input section (23) in said machine tool controller (15), functions of said machine tool controller (15) that can be operated by an operator via direct operation of said machine tool controller (15) are restricted according to the authorization level received from the authorization database (35) in said machine tool controller (15).

2. The remote control system (11) for a machine tool (13) as claimed in Claim 1, wherein said operation terminal apparatus (17) is connected to plural machine tool controllers (15) via communication lines (19).

3. The remote control system (11) for a machine tool (13) as claimed in Claim 1, wherein said machine tool controller (15) comprises a selector switch (43) for selecting whether remote control from said operation terminal apparatus (17) should be allowed or forbidden.

## Patentansprüche

1. Fernsteuerungssystem (11) für eine Werkzeugmaschine (13), aufweisend eine Werkzeugmaschinensteuerung (15), die in der Umgebung der Werkzeugmaschine (13) angeordnet ist, und eine Betätigungsterminalvorrichtung (17), die an einem entfernt von der Werkzeugmaschine (13) liegenden Ort vorgesehen ist, wobei die Betätigungsterminalvorrichtung (17) einen Registrierungsnameneingabebereich (45) zum Eingeben eines Registrierungsnamens und eine Autorisierungsniveaudatenbank (53) aufweist, die das Autorisierungsniveau entsprechend dem Registrierungsnamen spezifiziert, der von dem Registrierungsnameneingabebereich (45) in die Betätigungsterminalvorrichtung (17) eingegeben wurde, wobei die Betätigungsterminalvorrichtung (17) unter Bezugnahme auf die Autorisierungsdatenbank (53) das Autorisierungsniveau an die Werkzeugmaschinensteuerung (15) überträgt, wobei die Werkzeugmaschinensteuerung (15) einen Eingabebereich (23), eine Autorisierungsdatenbank (35), die das Autorisierungsniveau entsprechend des von dem Eingabebereich (23) in die Werkzeugmaschinensteuerung (15) eingegebenen Registrierungsnamen entspricht, und eine Beschränkungsfunktionsdatenbank (37) umfasst, die ein Autorisierungsniveau mit zur Betätigung zugelassenen Funktionen oder zur Betätigung verbotenen Funktionen abgleicht, und die Werkzeugmaschinensteuerung (15) unter Bezugnahme auf die Beschränkungsfunktionsdatenbank (37) zur Betätigung zugelassene Funktionen oder zur Betätigung verbotene Funktionen entsprechend dem empfangenen Autorisierungsniveau spezifiziert, wobei nach Maßgabe mit dem von der Betätigungsterminalvorrichtung (17) eingegebenen Registrierungsnamen Funktionen der Werkzeugmaschinensteuerung (15), die von einem Nutzer über die Betätigungsterminalvorrichtung (17) betätigbar sind, gemäß dem von der Betätigungsterminalvorrichtung (17) empfangenen Autorisierungsniveau beschränkbar sind; und wobei nach Maßgabe des in den Eingabebereich (23) in der Werkzeugmaschinensteuerung (15) eingegebenen Registrierungsnamen Funktionen der Werkzeugmaschinensteuerung (15), die von einem Nutzer über direkte Betätigung der Werkzeugmaschinensteuerung (15) betätigbar sind, gemäß des von der Autorisierungsdatenbank (35) in der Werkzeugmaschinensteuerung (15) empfangenen Autorisierungsniveaus beschränkbar sind.

2. Fernsteuerungssystem (11) für eine Werkzeugmaschine (13) nach Anspruch 1, wobei die Betätigungsterminalvorrichtung (17) mit einer Mehrzahl von Werkzeugmaschinensteuerungen (15) über Kommunikationsleitungen (19) verbunden ist.

3. Fernsteuerungssystem (11) für eine Werkzeugmaschine (13) nach Anspruch 1, wobei die Werkzeugmaschinensteuerung (15) einen Auswahlschalter (43) zum Auswählen aufweist, ob die Fernsteuerung von der Betätigungsterminalvorrichtung (17) zugelassen oder verboten werden soll.

## Revendications

1. Système (11) de commande à distance pour une machine-outil (13), comprenant un contrôleur (15) de machine-outil agencé à proximité de la machine-outil (13) et un appareil terminal (17) d'opération prévu en un emplacement distant de la machine-outil (13),
dans lequel ledit appareil terminal (17) d'opération comprend une section (45) d'entrée de nom enregistré pour entrer un nom enregistré, et une base de données (53) de niveaux d'autorisation qui spécifie le niveau d'autorisation correspondant au nom enregistré entré à partir de ladite section (45) d'entrée de nom enregistré dans ledit appareil terminal (17) d'opération et ledit appareil terminal (17) d'opération, en se référant à ladite base de données (53) d'autorisation, transmet le niveau d'autorisation audit contrôleur (15) de machine-outil ;
dans lequel ledit contrôleur (15) de machine-outil comprend une section (23) d'entrée, une base de données (35) d'autorisation qui spécifie le niveau d'autorisation correspondant au nom enregistré entré à partir de la section (23) d'entrée dans ledit contrôleur (15) de machine-outil, et une base de données (37) de fonctions restreintes qui met en correspondance un niveau d'autorisation avec des fonctions d'opération autorisée ou des fonctions d'opération interdite, et ledit contrôleur (15) de machine-outil, en se référant à la base de données (37) de fonctions restreintes, spécifie les fonctions d'opération autorisée ou les fonctions d'opération interdite correspondant au niveau d'autorisation reçu ; et
dans lequel, en fonction du nom enregistré entré dans ledit appareil terminal (17) d'opération, des fonctions dudit contrôleur (15) de machine-outil qui peuvent être opérées par un opérateur par l'intermédiaire dudit appareil terminal (17) d'opération sont restreintes en fonction du niveau d'autorisation reçu dudit appareil terminal (17) d'opération ; et
dans lequel, en fonction du nom enregistré entré dans la section (23) d'entrée dans ledit contrôleur (15) de machine-outil, des fonctions dudit contrôleur (15) de machine-outil qui peuvent être opérées par un opérateur par l'intermédiaire d'une opération directe dudit contrôleur (15) de machine-outil sont restreintes en fonction du niveau d'autorisation reçu de la base de données (35) d'autorisation dans ledit contrôleur (15) de machine-outil.

2. Système (11) de commande à distance pour une machine-outil (13) selon la revendication 1, dans lequel ledit appareil terminal (17) d'opération est connecté à des contrôleurs (15) de machine-outil multiples par l'intermédiaire de lignes (19) de communication.

3. Système (11) de commande à distance pour une machine-outil (13) selon la revendication 1, dans lequel ledit contrôleur (15) de machine-outil comprend un commutateur (43) de sélecteur pour sélectionner si une commande à distance à partir dudit appareil terminal (17) d'opération doit être autorisée ou interdite.
